Europäisches Patentamt

**European Patent Office**

**Office européen des brevets**

(11) Publication number: **0 081 871**
A1

# EUROPEAN PATENT APPLICATION

(21) Application number: **82201510.3**

(22) Date of filing: **29.11.82**

(51) Int. Cl.³: **F 03 D 7/04**

(30) Priority: **10.12.81 BE 206796**

(71) Applicant: **Hayen, Jos, Stokstraat, 10, B-3813 Zepperen (BE)**
Applicant: **Hayen, Paul, Eynestraat, 23, B-3813 Zepperen (BE)**

(43) Date of publication of application: **22.06.83**
**Bulletin 83/25**

(72) Inventor: **Hayen, Jos, Stokstraat, 10, B-3813 Zepperen (BE)**
Inventor: **Hayen, Paul, Eynestraat, 23, B-3813 Zepperen (BE)**

(84) Designated Contracting States: **AT CH DE FR GB IT LI LU NL SE**

(74) Representative: **Pieraerts, Jacques et al, Bureau Gevers S.A. rue de Livourne 7, Bte. 1, B-1050 Bruxelles (BE)**

(54) **Device for positioning the wings from a windmill.**

(57) The invention pertains to a device for bringing to an optimum angular position relative to the wind direction, the vanes or wings rotatable about the lengthwise axis thereof, from a windmill which drives an electric generator, in which a fastening part (9) is fast to a control shaft (10) which is movable to-and-fro along the lengthwise axis thereof, in such a way that due to such movement of the control shaft (10), it is possible to act on the rotation of said vanes (1) through a hinge connection (5).

"Device for positioning the wings from a windmill".

This invention pertains to a device for bringing to an optimum angular position relative to the wind direction, the vanes or wings rotatable about the lengthwise axis thereof, from a windmill which drives an electric generator, whereby each vane is supported to be separately rotatable on a rotor and all of the vanes are connected together by means of a hingedly connection thereof to a center fastening part.

When describing the optimum position of a rotatable vane relative to the wind direction, reference will be made to the properties of the dimensionless coefficients $C_L$, $C_D$, $C_P$, $C_M$ corresponding to the lift , resistance, power, and couple coefficient from a vane profile to vary as the relative wind leading angle varies relative to the reference line of a vane.

Use is made of such properties which are valid for all wing profiles, to increase the starting couple as the windmill lies at rest;  to protect the windmill against overloading of the electric generator; and to protect the windmill against excess speed and very high speeds.

The invention has particularly for object to provide a device in which for such a windmill, those axial forces which are generated along the lengthwise direction of the drive shaft are absorbed and the positioning of the adjustable vanes can occur with reliable means, from a programmed unit.

To this end said fastening part through which the vanes are hingedly connected, is fast to a control shaft which is movable to-and-fro along the lengthwise axis thereof, in such a way that due to said movement of the control shaft, it is possible to act on the rotation of said vanes through said hinged connection between the center fastening part and a hinge axis eccentrically located relative to the lengthwise axis of each vane on the foot part thereof.

A feature of the invention lies in said control shaft being fixedly connected to the shaft of a gear-box and being mounted with the end thereof removed from the rotor, in a coupling part which is formed as a bearing housing, which coupling part is connected to a piston rod lying in the extension of said control shaft, and said bearing housing is resiliently received between a fixed component from the windmill, and that gear-box shaft which is connected to the rotor, in such a way that a movement of said piston rod causes a corresponding movement of said control shaft and thus of the connecting part connected thereto, which acts on the angular position of the vanes.

According to the invention also, said piston rod is controlled by a hydraulic pressure the changes of which on either side of the piston inside the cylinder provided therefor, may be controlled according to various parameters such as : starting couple with the windmill standing still, overloading of the electric generator, exceeding the optimum revolution speed and generating very high windmill speeds, whereby further said cylinder is connected in an oil line mounted on an oil-pressure pump, line on which valves are mounted which may be remotely-controlled by a programme-controlled unit such as a computer.

Other details and advantages of the invention will stand out from the following description, given by way of non limitative example and with reference to the accompanying drawings, in which :

Figures 1 to 4 show diagrammatically the possible positions of a vane in conditions which will be further described hereinafter.

Figure 5 is a diagrammatic lengthwise section through the main mechanical part of the device according to the invention.

Figure 6 shows the hydraulic diagram by means of which, when acting on a piston and the piston rod and control shaft connected thereto, it is possible to act on the optimum positioning of the vanes from the windmill.

The device according to the invention will now be described in detail after giving first an explanation of those phenomenoms which are the base for a required optimum positioning of the rotatable vanes from a windmill of the above-defined type .

As regards the figures, the various parameters are to be defined as follows :

VW        :   wind speed

$\Omega$r    :   peripheral velocity of the vane

V rel   :   relative leading speed of the wind

$\alpha$A       :   optimum relative leading angle

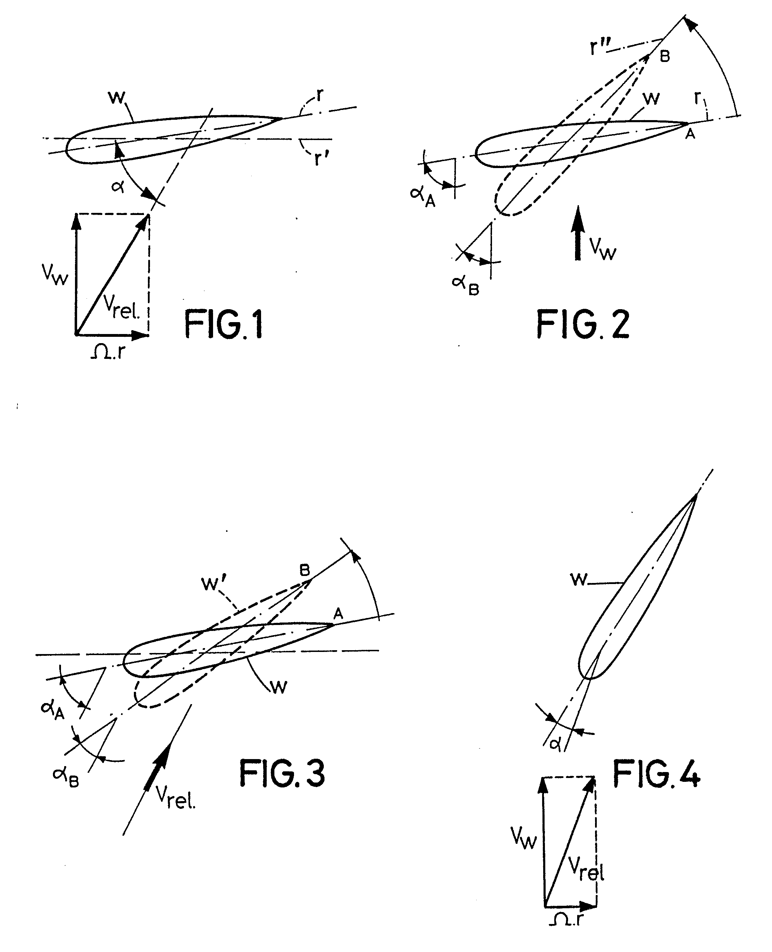

The angles, notably the leading angle, are measured relative to the reference line of the vane. This appears quite clearly from figure 1 where angle $\alpha$ is measured between reference line r of the vane or wing W and that straight line r' which corresponds to the wind direction. It is determined that said angle is not the optimum leading angle when starting the windmill. Should it be desired to increase the starting couple with the windmill lying at rest, it is then required with reference to figure 2, to bring the reference line r from wing W to the position of reference line r" from that same wing W. It does indeed appear from wing graphs that for $\Omega$.r = 0, the rotation of the wing or vane from position A to position B (fig. 2) results in increasing coefficient $C_L$, whereby the vane starting couple is increased.

When with wind speeds which are higher than the normal value, said vane W (fig. 3) remains positioned at angle $\alpha$A, the power follows the wind speed according to the third power. There is thus a high probability that the generated electrical power will be higher than the highest allowable value. Therefore the vane W has to be rotated to position W'(fig. 3). This causes a lowering of

$C_L$, $C_D$ as well as $C_P$. It is possible thereby to limit the value of the generated power, according to the value of $\alpha A$.

When the revolution speed of the rotor becomes too high for high wind speeds, there is a possibility of serious damage to the mechanical structure and components. By making use of those properties which are clear from figure 3, the lift coefficient will also be decreased, which makes possible limiting of the revolution speed.

With very high wind speeds, the vanes have to be rotated to the so-called feathering position. Said feathering position is shown in figure 4. When the vanes are rotated to such a position, the lift and resistance coefficients and the resulting forces are minimized. A low peripheral velocity of the rotor and a small loading of the vanes and the mechanical components connected thereto are the result.

To obtain the above-defined angle changes, all of the vanes have to be rotatable synchroneously about the lengthwise axis thereof. The following conditions have to be fulfilled thereby :

The vanes have to be supported each separately on the rotor or rotor head;

The vanes have to be so connected together that they each take one and the same position relative to the wind, independently from other parameters ;

There has to be provided a control unit which insures the required vane rotation ; there has to be provided a monitoring unit which measures and monitors all of the parameters to be able to impart the required corrections to the vanes.

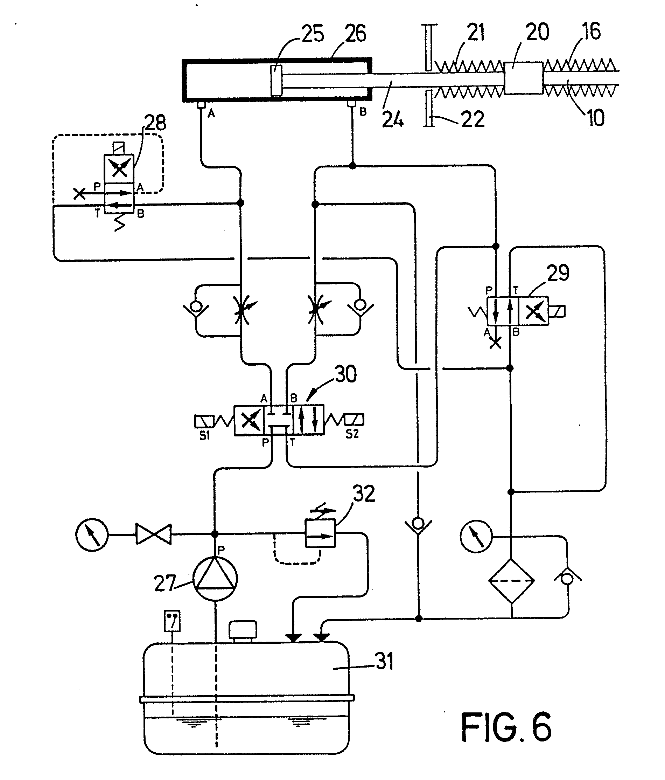

In figure 4 is shown as a diagrammatic lengthwise section, an actual embodiment which due to a hydraulic control a diagram of which is shown in figure 6, insures the rotation of said vanes according to the above- defined known parameters.

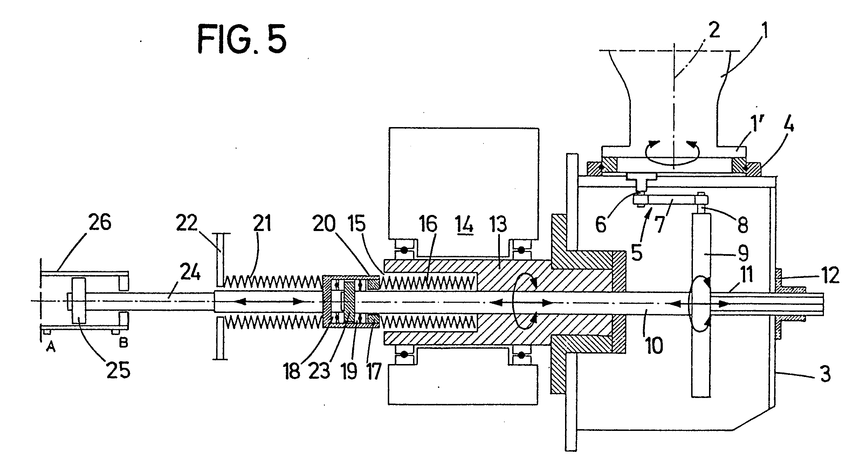

In that portion of the device figure 5 pertains to, it is seen how the vanes 1 are rotatably mounted about the lengthwise axis 2 thereof, on rotor head 3. The vane 1 is rotatably mounted with the foot part 1' thereof relative to the rotor, by means of ring bearings 4. By means of a hinged connection 5, each vane is connected to an eccentric hinge axis 6 and an arm 7 by means of a hinge axis 8, to the center fastening part 9. Said fastening part 9 is fast to the control shaft 10. That end of said control shaft 10 which projects outwards through rotor head 3, is formed as spline shaft 11 which is alternately slidable but not rotatable in a spline tube 12.

The control shaft 10 with the connecting part 9 fast thereto thus rotates together with rotor head 3, but is also slidable to-and-fro along the lengthwise axis thereof. With such movements, there is direct action on the position of the vanes 1 which may all take synchroneously the same position relative to the wind direction.

To act hydraulically on the lengthwise movements of the control shaft 10, there has been designed a structure which, on the one hand, absorbs the force generated along the lengthwise direction on the control shaft 10, and on the other hand , makes possible a very reliable control of that same shaft 10, by acting hydraulically on a piston, according to known parameters, as further explained hereinafter.

To be able to act on the lengthwise movements of the control shaft 10 and to be able to take over the above-defined forces along the lengthwise direction of said shaft, the control shaft 10 is fixedly connected to the hollow shaft 13 from gear-box 14. Over part of the length thereof, said shaft 13 forms a hollow cylinder-shaped chamber 15, wherein Belleville washers 16 are supported. Said Belleville washers 16 bear in turn on the bottom of said cylinder-shaped hollow chamber 15 which is part of shaft 13 and on the other hand, on the ring 17 which together with bearings 18 and 19, can take over the pressure force in both directions.

The ring 17 and bearings 18 and 19 are the inner components from a coupling part 20 on the outer side of which bear the Belleville washers 21 which bear in turn on a fixed component 22 which is part of the windmill structure. Inside said coupling part, the control shaft 10 is retained with a disc-like head 23 between said bearings 18 and 19. On the outer side, said coupling part 20 is connected fixedly with the bottom thereof to the piston rod 24. The other end of said piston rod is provided with a disc-like piston 25 which is supported inside the pressure cylinder 26.

It is immediately clear that said piston 25 may be moved rightwards or linkwards (fig. 6), according to whether a hydraulic pressure is present inside the pressure cylinder 26 at the A port or the B port thereof.

It appears directly from the above description that every linear movement of piston rod 24 with the motor rotating, may be converted to a rotating motion of the vanes 1.

As it appears from figure 6, said hydraulic cylinder 26 is mounted in a hydraulic system which comprises an oil pump 27 and a series of oil lines which end at the A port and B port from said hydraulic cylinder 26. The operation of the device and the explanation of the hydraulic diagram will now be further detailed with reference to the four following possible conditions :

1. Windmill at rest.

With the motor at rest, the hydraulic piston 23 due to the pressure of the Belleville washers 16 and 21, lies in such a position that the pressure on either side of coupling part 20 is equal. To such a position of hydraulic piston 23 corresponds a particular adjusting value of vanes 1. Said condition determines the starting position of the vanes as shown in figure 2. In such a position of the vanes, the windmill obtains an increased starting moment and with a light wind, it will already rotate slowly. On that moment where the revolution speed differs from zero revolution per minute, the valves 28 and 29 are energized - as shown in figure 6 , said valves are not energized. The requirement of operating valves 28 and 29 will be further detailed hereinafter.

<u>2. The revolution speed of the vanes reaches an adjustable value</u>.

When the revolution speed reaches a particular, adjustable value which is a measure of the fact that on this particular moment there is enough wind, coil S2 from valve 30 is energized, while simultaneously the valves 28 and 29 are energized. The pressure generated by pump 27 now lies at port P from valve 30 and thus also at port A from hydraulic cylinder 26. Due to the energizing of valves 28 and 29, port B from said hydraulic cylinder lies on the pressure-free side. Piston 23 moves thereby rightwards (figure 6) and the vanes 1 are rotated to the optimum end position thereof. The windmill will now increase in speed and the rated revolution speed will be reached, whereby the electric generator delivers power. According to the increase in the revolution speed, the windmill will be more strongly loaded electrically.

<u>3. The electric power reaches an adjustable minimum value</u>.

When the generated power has reached a particular adjustable minimum value, coil S2 from valve 30 is no more energized, whereby the pressure side P from oil pump 27, due to valve 28 being energized, is coupled to the pressure-free tank 31. The pump 27 now works pressure-free which minimizes the power being consumed and the generating of friction heat.

As the power being generated by the windmill increases together with the wind speed according to the third power, said power will load too heavily the electric generator for wind speeds above the rated value.

### 4. The electric power exceeds the allowable limit.

On that moment where the electric power becomes too high, the valves 28 and 29 are no more energized, while coil Sl from valve 30 is energized. The pressure side from pump 27 lies at port B from said hydraulic cylinder 26. Port A therefrom then lies through valves 28 and 29, on the pressure-free side of oil tank 31. Hydraulic piston 23 moves thereby leftwards (fig. 6).

### 5. The power is lowered to the adjusted value.

On that moment where the power has been lowered enough, the valves 28 and 29 are energized again. Due to the control of valves 28 and 29 with short pulses, it is possible to regulate the speed said hydraulic piston 23 moves at, as well as the accuracy in the adjustment of said piston.

Should the power increase due to the wind speed rising again, the process as described under point 4 will be repeated.

### 6. Lowering of the wind speed.

Should actually the wind speed decrease, the power will decrease due to the non-optimum position of the vanes and the windmill works with a low efficiency. With such a decrease in the wind speed, coil S2 of valve 30 will be energized again until port A from said hydraulic cylinder 26 lies again on the pressure side and the piston 23 is moved rightwards (fig. 6). Such movement of said pistonn returns the vanes 1 to the optimum position, in such a way that the windmill will again work with an optimum efficiency.

### 7. Fault of the electric generator.

Should the generator develop a fault, the generated power will always be smaller than the adjusted minimum value. Consequently the pressure side of oil pump 27 will lie continuously at port A from hydraulic cylinder 26. The vanes 1 will thus be rotated to the optimum position and retained in such a position, independently of the wind speed. The unloaded windmill will thereby rotate too fast, even at low wind speeds, which might cause damage to the mechanical structure. To prevent such damage, the revolution speed of the windmill is continuously measured with an inductive sensor. When due to a fault of the generator, the revolution speed rises for some time above an adjustable maximum value, all of the valves including the overpressure-limiting valve 32, are unenergized. Port B from said pressure cylinder 26 lies through the flow channel of valve 30, on the pressure side of oil pump 27, while port A of pressure cylinder 26 lies through valves 28 and 29, on the pressure-free tank. Piston 23 moves leftwards (fig. 6) and the vanes are rotated to the feathered position as shown in figure 4.

Piston 23 and therewith said vanes 1 coupled through piston rod 24 and control shaft 10, move until the pressure from Belleville washers 21 is equal to that oil pressure then prevailing.

Should such pressure increase due to an increasing revolution speed, the vanes are thus further rotated. in such a way that the windmill will then rotate at a very low speed.

As it is possible to rotate the vanes approximately to 37° relative to the revolution plane, the windmill is protected against wind speeds which may reach 67 m. per second.

The various valves remain unenergized until the fault has been traced and the windmill has been returned by hand to a rotating condition. With such a starting, the vanes return to the starting position as described in point 1, notably with reference to figure 2. Should the windmill revolution counter have a fault, there will then be continuously measured zero revolution per minute even with the windmill rotating. To prevent the windmill reaching thereby too high a speed, the valves 28, 29 and 30 are not energized.

The pressure lies then continuously at port B from pressure cylinder 26, which causes the vanes to rotate to the feathered position (fig. 4).

When the revolution speed is different from zero, the valves 28 and 29 are energized and the windmill may again operate normally.

8. Fault in the hydraulic pump, line
   break, or valve leak.

With a fault in the hydraulic pump 27, a line break, or a leak in the one valve, the pressure drops, as well at port A as at port B from pressure cylinder 26. Piston 23 is then pushed back by said Belleville washers 16 to the so-called center position whereby the vanes 1 are brought to the starting position (fig.2). The windmill is now protected against overspeeds up to wind speeds which may reach 45 m. per second.

Said springs 16 and 21 thus provide a series of advantages, some of which have been defined hereinabove. Such advantages may be summarized as follows:

Said springs 16 protect the windmill under all conditions up to wind speeds of 45 m./ second.

Said Belleville washers 16 and 21 provide the advantage that in case of a break, but a small portion of the force is lost, while when using coil springs, the complete spring force is lost.

The pressure force from the Belleville washers 16 can reach up to 2.9 tons when the windmill operates in an optimum way. Such force presses frontwards the hollow shaft 13 from the gear-box, while the wind force on the rotor 3 works in the opposite direction. Thereby the wind pressure is partly compensated in such a way that the gear-box bearings are markedly unloaded. The gear-box is thus subjected to a less heavy wear.

14

0081871

The invention is in no way limited
to the above embodiments, and many changes may be
brought thereto without departing from the scope
of the invention, as defined by the appended claims.

## CLAIMS.

1. Device for bringing to an optimum angular position relative to the wind direction, the vanes or wings rotatable about the lengthwise axis thereof, from a windmill which drives an electric generator, whereby each vane is supported to be separately rotatable on a rotor and all of the vanes are connected together by means of a hingedly connection thereof to a center fastening part, in which said fastening part (9) is fast to a control shaft (10) which is movable to-and-fro along the lengthwise axis thereof, in such a way that due to said movement of the control shaft (10), it is possible to act on the rotation of said vanes (1) through said hinged connection (5) between the center fastening part (9) and a hinge axis (6) eccentrically located relative to the lengthwise axis of each vane (1) on the foot part (1') thereof.

2. Device as defined in claim 1, in which said control shaft (10) is fixedly connected to the hollow shaft (13) of a gear-box (14) and is mounted with the end thereof removed from the rotor (3) in a coupling part (20) which is formed as a bearing housing, which coupling part is connected to a piston rod (24) lying in the extension of said control shaft (10), and said bearing housing is resiliently received between a fixed component (22) from the windmill, and that gear-box hollow shaft (13) which is connected to the rotor, in such a way that a movement of said piston rod (24) causes a corresponding movement of said control shaft (10) and thus of the connecting part (9) connected thereto, which acts on the angular position of the vanes (1).

3. Device as defined in either one of claims 1 and 2, in which that end of said control shaft (10) removed from said piston rod (24), is formed as spline shaft (11) and fits slidably but unrotatably inside a spline tube (12) from said rotor (3).

4. Device as defined in claim 2, in which said coupling part (20) is formed by a cylinder-shaped tube the bottom of which is fixedly connected to said piston rod (24), while the bearing housing is provided inwardly with bearings (18,19) between which the head (23) from said control shaft (10) is retained.

5. Device as defined in any one of claims 1-4, in which those springs between which said coupling part is received, are Belleville washers.

6. Device as defined in any one of claims 1-5, in which said piston rod (24) is controlled by a hydraulic pressure the changes of which on either side of the piston inside the cylinder provided therefor, may be controlled according to various parameters such as : starting couple with the windmill standing still, overloading of the electric generator exceeding the optimum revolution speed and generating very high windmill speeds, whereby further said cylinder is connected in an oil line mounted on an oil-pressure pump,

0081871

which line is provided with the required valves to cause said changes.

7. Device as defined in claim 6, in which said valves are remote-controlled electromagnetic valves the setting of which can act on the oil pressure balance inside said hydraulic cylinder, which valves are controlled according to stored informations.

0081871

FIG.1

FIG.2

FIG.3

FIG.4

0081871

FIG.5

FIG.6

# EUROPEAN SEARCH REPORT

0081871
Application number

EP 82 20 1510

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 372 971 (HUTTER) *Page 8, line 30 - page 9, line 36; page 11, line 29 - page 12, line 7* | 1 | F 03 D 7/04 |
| A | US-A-4 348 154 (DUCKER) *Column 12, line 60 - column 14, line 4; figure 22* | 2,4 | |
| A | GB-A-2 072 271 (SUNDSTRAND CORP.) *Abstract* | 1,2,5 | |
| A | DE-A-2 851 720 (M.A.N.) *Page 10, line 5 - page 11, line 13* | 6,7 | |

TECHNICAL FIELDS SEARCHED (Int. Cl. ³)

F 03 D

The present search report has been drawn up for all claims

| Place of search THE HAGUE | Date of completion of the search 15-03-1983 | Examiner DE WINTER P.E.F. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82